# EUROPÄISCHE PATENTSCHRIFT

(11) **EP 2 804 785 B1**
(45) Veröffentlichungstag und Bekanntmachung des Hinweises auf die Patenterteilung: **07.06.2017**
(21) Anmeldenummer: 12809651.8
(22) Anmeldetag: 05.12.2012
(51) Int. Cl.: B60R 1/00

(54) **ANZEIGESYSTEM FÜR EIN FAHRZEUG**
DISPLAY SYSTEM FOR A VEHICLE
SYSTÈME D'AFFICHAGE DESTINÉ À UN VÉHICULE

(30) Priorität: 17.01.2012 DE 102012200636
(43) Veröffentlichungstag der Anmeldung: 26.11.2014
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2012/074500
(87) Internationale Veröffentlichungsnummer: WO 2013/107562

(56) Entgegenhaltungen:
- JP-A- 2010 137 697
- Anonymous: "Backup camera", Wikipedia, 2. Januar 2012 (2012-01-02), XP055056373, Gefunden im Internet: URL:http://en.wikipedia.org/wiki/Backup_ca mera [gefunden am 2013-03-13]
- Anonymous: "Spiegelschrift", Wikipedia, 2. Januar 2012 (2012-01-02), XP055056379, Gefunden im Internet: URL:http://de.wikipedia.org/w/index.php?ti tle=Spiegelschrift&oldid=97836259 [gefunden am 2013-03-13]

## Beschreibung

Die vorliegende Erfindung betrifft ein Anzeigesystem für ein Fahrzeug, mit dem eine Umgebung des Fahrzeuges anzeigbar ist, mit mindestens einer Kamera zur Aufnahme eines Bildes der Umgebung und mit einer Anzeigeeinheit, auf der das Bild zumindest teilweise darstellbar ist, gemäß den Merkmalen des Anspruchs 1. Weiterhin betrifft die vorliegende Erfindung ein Verfahren zum Anzeigen einer Umgebung eines Fahrzeuges, wobei eine Kamera ein Bild von der Umgebung des Fahrzeuges aufnimmt, wobei eine Anzeigeeinheit das Bild zumindest teilweise darstellt, gemäß den Merkmalen des Anspruchs 7.

### Stand der Technik

Die US 2002/0017985 A1 offenbart ein Anzeigesystem für ein Fahrzeug, bei dem auf einer Anzeigeeinheit eine rückwärtige Umgebung des Fahrzeuges, die durch mehrere Erfassungseinrichtungen aufgenommen wurde, angezeigt ist. Hierbei simuliert die Anzeige der rückwärtigen Umgebung auf der Anzeigeeinheit eine Anzeige der Umgebung durch einen konventionellen Spiegel.

Nachteilig ist hierbei, dass hierdurch Zeichen, die spiegelverkehrt eine Information für den Fahrer enthalten würden, wie z. B. Schriftzeichen, in einer für den Fahrer nicht lesbaren Art und Weise angezeigt sind.

Die Schrift JP 2010 137697 A beschreibt ein Anzeigensystem, das Bilder einer Kamera so darstellt, dass der Fahrer sofort erkennt von welcher Kamera das Bild aufgenommen wurde. Die Bilder werden in Abhängigkeit der lokalen Position der erfassenden Kamera am Fahrzeug als Ganzes entweder normal oder spiegelverkehrt in der Anzeige dargestellt.

Die Internetseite http://en.wikipedia.org/wiki/Backup_camera, gefunden am 20-03-13, offenbart eine Heckkamera, die das aufgenommene Bild spiegelverkehrt darstellt, sodass der Fahrer, der an eine Rückspiegelansicht gewöhnt ist, nicht verwirrt wird. Das bedeutet ein Schriftzug wird so dargestellt, dass er nicht in Leserichtung angezeigt wird.

### Offenbarung der Erfindung

Es ist Aufgabe der vorliegenden Erfindung, ein Anzeigesystem und ein Verfahren zum Anzeigen einer Umgebung eines Fahrzeuges bereitzustellen, bei dem die Sicherheit beim Fahren erhöht ist. Dabei soll das Anzeigen der Umgebung des Fahrzeuges für den Fahrer so einfach und/oder vorteilhaft wie möglich sein, insbesondere soll eine Schrift von Schildern usw. leicht lesbar wiedergegeben werden.

Zur Lösung der Aufgabe wird ein Anzeigesystem mit den Merkmalen des Anspruches 1 vorgeschlagen. Vorteilhafte Weiterbildungen des Anzeigesystems sind in den abhängigen Vorrichtungsansprüchen angegeben. Die Aufgabe wird weiterhin durch ein Verfahren mit den Merkmalen des unabhängigen Anspruchs 9 gelöst. Vorteilhafte Weiterbildungen des Verfahrens sind in dem abhängigen Verfahrensanspruch angegeben. Merkmale und Details, die im Zusammenhang mit dem erfindungsgemäßen Anzeigesystem beschrieben sind, gelten dabei auch im Zusammenhang mit dem erfindungsgemäßen Verfahren und umgekehrt.

Erfindungsgemäß ist vorgesehen, dass das Anzeigesystem eine Bearbeitungseinheit aufweist, die, wenn das Bild zumindest einen Informationsbereich enthält, den Informationsbereich automatisch erkennt und das auf der Anzeigeeinheit darzustellende Bild zumindest teilweise derart bearbeitet, dass der Informationsbereich in einem übrigen Bild auf der Anzeigeeinheit in einer Ansicht, die spiegelbildlich zu dem übrigen Bild ist, darstellbar ist.

Das Anzeigesystem stellt einem Fahrer des Fahrzeuges Informationen über eine Umgebung des Fahrzeuges in Form mindestens eines eventuell bearbeiteten Bildes der Umgebung auf der Anzeigeeinheit zur Verfügung. Mindestens eine am Fahrzeug angeordnete Kamera des Anzeigesystems nimmt hierzu die Umgebung auf. Auch können mehrere Kameras vorgesehen sein, um die Umgebung vom Fahrzeug möglichst weitgehend zu erfassen. Hierbei kann der Begriff Umgebung auch nur einen Teil der Umgebung, die das Fahrzeug an allen Seiten umgibt, umfassen. Z. B. kann unter dem Begriff Umgebung nur eine rückwärtige Umgebung verstanden werden. Das von der Kamera aufgenommene Bild der Umgebung wird von einer Anzeigeeinheit des Anzeigesystems, die z. B. als ein Monitor ausgebildet ist, in einer für den Fahrer vorteilhaften Weise dargestellt. Hierbei kann das von der Kamera aufgenommene Bild zuvor von der Bearbeitungseinheit zumindest teilweise bearbeitet worden sein. Auch können die Aufnahmen von mehreren Kameras zu einem gemeinsamen Bild zusammengefügt werden.

So ist es denkbar, dass die Umgebung des Fahrzeuges auf der Anzeigeeinheit bis auf den Informationsbereich wie gespiegelt, also spiegelverkehrt, angezeigt ist. Das heißt, "links" und "rechts" sind im Gegensatz zu "oben" und "unten" vertauscht. Dieses ist vor allem dann der Fall, wenn es sich um die rückwärtige Umgebung des Fahrzeuges, die auf der Anzeigeeinheit anzuzeigen ist, handelt. Der Fahrer ist es nämlich gewöhnt, die rückwärtige Umgebung des Fahrzeuges wie in konventionellen Rückspiegeln angezeigt zu betrachten. Somit kann die Kamera eine Rückfahrkamera sein. Die Kamera nimmt hierbei die rückwärtige Umgebung des Fahrzeuges auf.

Eine Darstellung des Bildes auf der Anzeigeeinheit, die einer Spiegelansicht entspricht, ist jedoch nicht für alle Bereiche des auf der Anzeigeeinheit dargestellten Bildes der Umgebung vorteilhaft. Z. B. sind spiegelverkehrt dargestellte Schriftzeichen und Zahlen für den Fahrer schlecht oder gar nicht auf der Anzeigeeinheit lesbar. Ein Bereich, für den die eigentlich vorgesehene, insbesondere spiegelverkehrte, Darstellung des Bildes unvorteilhaft für den Fahrer ist, wird im Folgenden als Informationsbereich bezeichnet. Ist ein solcher Informationsbereich vorhanden, so wird das von der Kamera aufgenommene Bild in mindestens einen Informationsbereich, und in ein übriges Bild, für das die eigentlich vorgesehene, insbesondere spiegelverkehrte, Darstellung auf der Anzeigeeinheit vorteilhaft für den Fahrer ist, unterteilt. Anders ausgedrückt, enthält der Informationsbereich wenigstens ein Zeichen, das spiegelbildlich zu der übrigen Umgebung eine für den Fahrer besser oder überhaupt aufnehmbare Information enthält. Das übrige Bild entspricht dem von der Kamera aufgenommenen und/oder auf der Anzeigeeinheit darzustellenden Bild ohne den Informationsbereich. Der Informationsbereich kann als ein Element, das spiegelbildlich zu der übrigen Umgebung darzustellen ist, mindestens ein Schriftzeichen und/oder eine Zahl und/oder ein Sonderzeichen enthalten. Der Informationsbereich kann zusätzlich oder alternativ ein Schild, insbesondere ein unsymmetrisches Schild, sein. Insbesondere kann der Informationsbereich ein oder mehrere Worte enthalten. Z. B. kann der Informationsbereich ein Parkplatzzuweisungsschild, ein Warnhinweis, eine Beschriftung auf dem Straßenuntergrund, ein Stopp-Schild, ein unsymmetrisches Schild wie ein Baustellen- oder ein Steinschlagwarnschild sein. Pfeile können bevorzugt nicht als Informationsbereich erkannt werden. Es können in einem Bild auch keine oder mehrere Informationsbereiche vorhanden sein.

Erfindungsgemäß wird auf der Anzeigeeinheit der Informationsbereich in der Ansicht, die spiegelbildlich zu dem übrigen Bild ist, und zeitgleich mit dem übrigen Bild dargestellt. Insbesondere wird in einem spiegelverkehrt auf der Anzeigeeinheit dargestellten übrigen Bildes der Informationsbereich zeitgleich und nicht spiegelverkehrt dargestellt. Hierdurch ist dem Fahrer auch in dem Informationsbereich vorhandene Information leicht zugänglich, insbesondere lesbar, so dass der Fahrer die Information in sein Fahrverhalten einbeziehen kann und/oder durch die schwer zu entziffernde Information nicht vom Fahren abgelenkt wird. Die Sicherheit beim Fahren wird somit erhöht. Die Lage des Informationsbereiches auf dem Bild wird hierbei nicht gespiegelt, sondern es ist nur ein Spiegelbild des Informationsbereiches an einer im Wesentlichen unveränderten Lage im Bild vorgesehen. Die Lage des Informationsbereiches entspricht somit der Lage des Informationsbereiches im übrigen Bild, wenn der Informationsbereich nicht spiegelbildlich zu dem übrigen Bild dargestellt werden würde. Für die erfindungsgemäße Art der Darstellung auf der Anzeigeeinheit ist die Bearbeitungseinheit, z. B. ein Prozessor, in dem Anzeigesystem vorgesehen, die einen Informationsbereich, falls vorhanden, erkennt und das von der Kamera erhaltene Bild entsprechend bearbeitet.

Es kann ferner vorgesehen sein, dass die Bearbeitungseinheit nur den Informationsbereich bearbeitet, insbesondere spiegelt. Alternativ kann die Bearbeitungseinheit ebenfalls dazu dienen, das von der Kamera aufgenommene Bild insgesamt zu bearbeiten. Z. B. kann die Bearbeitungseinheit nur einen relevanten Ausschnitt aus dem von der Kamera weitergeleiteten Bild herausnehmen und auf der Anzeigeeinheit darstellen lassen. Die Bearbeitungseinheit kann z. B. das übrige Bild so bearbeiten, dass das übrige Bild eine spiegelverkehrte Ansicht der Umgebung enthält, wenn die Kamera das Bild nicht spiegelverkehrt an die Bearbeitungseinheit übergibt. Um den nicht spiegelverkehrten Informationsbereich innerhalb eines spiegelverkehrten übrigen Bildes zu erhalten, kann die Bearbeitungseinheit den Informationsbereich und/oder das übrige Bild bearbeiten, insbesondere spiegeln. Erhält die Bearbeitungseinheit das von der Kamera aufgenommene Bild auf den Kopf gestellt und spiegelverkehrt, so wird die Bearbeitungseinheit sowohl den Informationsbereich als auch das übrige Bild bearbeiten. Ist das von der Kamera erhaltene Bild weder auf den Kopf gestellt noch spiegelverkehrt, so wird die Bearbeitungseinheit nur das übrige Bild bearbeiten. Ist das von der Kamera erhaltene Bild nur spiegelverkehrt, so dass das Bild bereits einer wie gespiegelten Ansicht entspricht, so wird die Bearbeitungseinheit nur den Informationsbereich bearbeiten.

Die Bearbeitungseinheit kann die Bearbeitung des Informationsbereiches und/oder des übrigen Bildes digital vornehmen. Insbesondere wird der Informationsbereich nach der Bearbeitung in das übrige Bild eingebunden. Hierbei kann der Rand des Informationsbereiches dem übrigen Bild angepasst werden, um eine Randbildung zu vermeiden. Beispielsweise können die Randpixel des Informationsbereiches mit dem übrigen Bild interpoliert oder überblendet werden. Alternativ bleibt ein definierter Rand um den Informationsbereich erhalten, um den Fahrer auf die Besonderheit des Informationsbereiches aufmerksam zu machen. Möglicherweise bearbeitet die Bearbeitungseinheit den Informationsbereich, indem die Bearbeitungseinheit den Informationsbereich, insbesondere digital, in das Spiegelbild des Informationsbereiches umwandelt und an die Anzeigeeinheit weiterleitet, wobei insbesondere das Spiegelbild des Informationsbereiches in das übrige Bild eingebunden ist.

Um einen Informationsbereich erkennen zu können, können in der Bearbeitungseinheit Formen hinterlegt sein, mit deren Hilfe die Bearbeitungseinheit einen Informationsbereich erkennt. Die Bearbeitungseinheit kann das von der Kamera erhaltene Bild auf die hinterlegten Formen abtasten und diese dann als in den Informationsbereich gehörig erkennen. Die Formen sind insbesondere Kantenformen, die eine äußere Kontur eines zu spiegelnden Elementes wiedergeben. Die Formen können z. B. der Kontur der einzelnen Buchstaben entsprechen. Die Bearbeitungseinheit kann die erkannten Formen selber dem Informationsbereich gleichsetzen oder die unmittelbare daran angrenzenden Bereiche ebenfalls in den Informationsbereich mit einbeziehen. Mehrere Formen können zu einem Informationsbereich verbunden werden. So kann ein Wort oder Text als Ganzes einem Informationsbereich gleichgesetzt werden. Eine ungefähre Lage der Formen, insbesondere des Textes, kann ausreichend sein, um einen Informationsbereich zu bestimmen. Eine optische Texterkennung (OCR) ist somit nicht notwendig. Alternativ kann das Erkennen eines Informationsbereiches über die optische Texterkennung erfolgen. Es kann ebenfalls vorgesehen sein, dass nur ein Schild ein Informationsbereich sein kann. In diesem Fall ist es ausreichend, nur die geometrische Kontur des Schildes zu erkennen und diese dem Informationsbereich gleichzusetzen.

Es kann vorgesehen sein, dass nur Formen in einem mittleren Bereich als Informationsbereich erkannt werden. Befindet sich ein Element, das spiegelbildlich zu der übrigen Umgebung für den Fahrer besser erkennbar ist, hingegen in einem äußeren Bereich des von der Kamera aufgenommenen Bildes, so wird vorzugsweise davon ausgegangen, dass diese Information für den Fahrer unerheblich ist. Dieses Element wird nicht als zu einem Informationsbereich gehörig erkannt und spiegelbildlich zu dem übrigen Bild auf der Anzeigeeinheit dargestellt. Insbesondere kann es sein, dass nur der mittlere Bereich des Bildes nach einem Informationsbereich abgesucht wird. Es kann sein, dass die Dimensionen des mittleren Bereiches parametrierbar gehalten sind und insbesondere von dem Fahrer einstellbar sind.

Möglicherweise kann dem Anzeigesystem zumindest eine Lageinformation über eine Bodenneigung in der Umgebung des Fahrzeuges und/oder über eine Fahrzeugneigung vorliegen. Die Lageinformation kann das Anzeigesystem von einer Initialsensorik erhalten. Die Lageinformation kann z. B. eine Querbeschleunigung des Fahrzeuges, ein Zustand von mindestens einem Federweg und/oder ein Zustand einer Niveauregulierung umfassen. Das Anzeigesystem, insbesondere die Bearbeitungseinheit, kann unter Verwendung der Lageinformation den Informationsbereich hinsichtlich seiner Lage besser bestimmen und den Informationsbereich in dem an die Anzeigeeinheit weiterzuleitenden Bild genauer anordnen.

Das Anzeigesystem kann auch von dem Anzeigesystem erkannte Informationen aus dem Informationsbereich an andere Bauelemente des Fahrzeuges weitergeben, z. B. die Geschwindigkeitsbegrenzung eines Geschwindigkeitsschildes an einen Tempomaten.

Um das Bild von der Kamera zu der Bearbeitungseinheit und/oder von der Bearbeitungseinheit zu der Anzeigeeinheit weiterzuleiten, kann das Anzeigesystem Übertragungselemente, insbesondere Kabel aufweisen. Ein kabelloses Weiterleiten der Bilder von der Kamera an die Bearbeitungseinheit und/oder von der Bearbeitungseinheit an die Anzeigeeinheit ist alternativ ebenfalls möglich.

Das erfindungsgemäße Anzeigesystem stellt dem Fahrer Ansichten über eine Umgebung des Fahrzeuges, insbesondere eines Kraftfahrzeuges, zur Verfügung. Hierbei kann es sich um zusätzliche Ansichten zu den Ansichten handeln, die der Fahrer durch konventionelle Rückspiegel und/oder die Sicht aus den Fenstern des Fahrzeuges erhält. Beispielsweise kann ein toter Winkel verringert werden. Alternativ oder zusätzlich kann das Anzeigesystem die Ansichten, die der Fahrer durch konventionelle Rückspiegel und/oder die Sicht aus den Fenstern des Fahrzeuges erhält, zumindest teilweise ersetzen.

Das erfindungsgemäße Anzeigesystem hilft dem Fahrer beim Fahren des Fahrzeuges, in dem das Anzeigesystem eine Umgebung, insbesondere eine nahe Umgebung, auf der Anzeigeeinheit darstellt. Insbesondere kann das erfindungsgemäße Anzeigesystem bei einem Ein- und/oder Ausparkvorgang eingesetzt werden. Der Einsatz des Anzeigesystems kann auf Ein- und/oder Ausparkvorgänge beschränkt sein. Alternativ ist der Einsatz des Anzeigesystems während des gesamten Fahrens des Fahrzeuges denkbar. Das Anzeigesystem kann eine oder mehrere Kameras der folgenden Kameras enthalten: eine oder mehrere Rückfahrkameras, eine oder mehrere Fontkameras, eine oder mehrere Seitenkameras. Das Anzeigesystem kann verschiedene Ansichten der Umgebung zur Verfügung stellen: eine Ansicht aus der Vogelperspektive auf das Fahrzeug, eine Ansicht direkt auf eine Anhängerkupplung, eine spiegelverkehrte Ansicht der rückwärtigen Umgebung. Hierbei wird das Anzeigesystem nur dann einen Informationsbereich erkennen und das Bild der Umgebung derart bearbeiten, dass der Informationsbereich in einer Ansicht, die spiegelbildlich zu dem übrigen Bild ist, darstellbar ist, wenn der Informationsbereich in dieser Ansicht für den Fahrer eine besser erkennbare Information enthält, z. B. eine nicht mehr spiegelverkehrte Schrift. Ist hingegen kein solcher Informationsbereich vorhanden, z. B. weil in einer Ansicht aus der Vogelperspektive das ganze Bild nicht spiegelverkehrt dargestellt wird, so entfällt auch das Erkennen und Bearbeiten des Informationsbereiches.

Die vorliegende Aufgabenstellung wird auch durch ein Verfahren gelöst, bei dem eine Kamera die Umgebung des Fahrzeuges aufnimmt. Eine Bearbeitungseinheit erkennt, ob das von der Kamera aufgenommene Bild einen Informationsbereich enthält. Wenn die Bearbeitungseinheit einen Informationsbereich erkannt hat, wird das Bild vor einem Darstellen auf der Anzeigeeinheit zumindest teilweise derart bearbeitet, dass der Informationsbereich in einem übrigen Bild in einer Ansicht, die spiegelbildlich zu dem übrigen auf der Anzeigeeinheit darzustellenden Bild ist, auf der Anzeigeeinheit dargestellt wird.

Weitere, die Erfindung verbessernde Maßnahmen ergeben sich aus der nachfolgenden Beschreibung zu den Ausführungsbeispielen der Erfindung, welche in den Figuren schematisch dargestellt sind. Es zeigen:
- Fig. 1: eine Draufsicht auf ein Kraftfahrzeug mit einem erfindungsgemäßen Anzeigesystem und eine rückseitige Umgebung des Kraftfahrzeuges,
- Fig. 2a: eine Darstellung einer rückwärtigen Umgebung des Kraftfahrzeuges aus Fig. 1 in einem konventionellen Innenspiegel,
- Fig. 2b: eine Darstellung der Umgebung aus Fig. 2a durch eine erfindungsgemäßes Anzeigesystem gemäß einem erfindungsgemäßen Verfahren und
- Fig. 3: ein erfindungsgemäßes Verfahren.

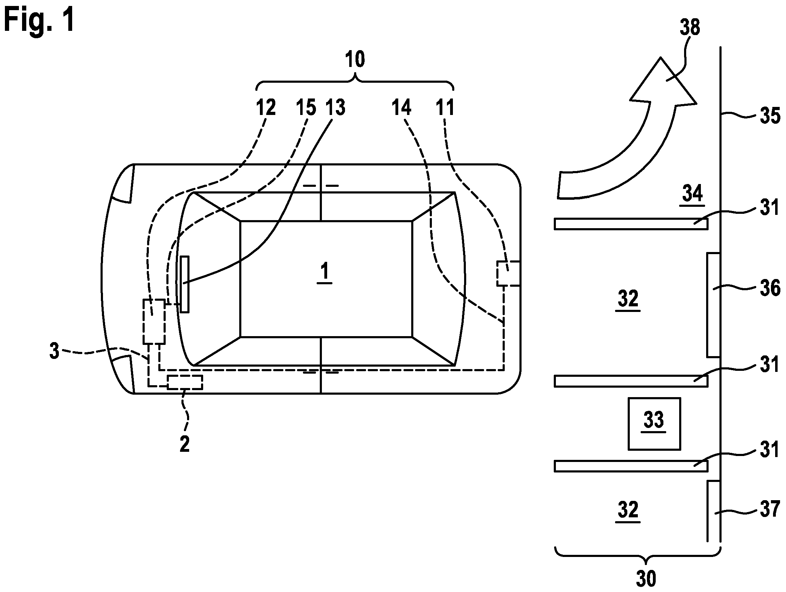

Technische Merkmale mit gleicher Funktion und Wirkungsweise sind in den Figuren 1 bis 3 mit denselben Bezugszeichen versehen.

In Figur 1 ist ein Kraftfahrzeug 1, das sich in einem Parkhaus befindet, sowie eine rückwärtige, im Vergleich zum Kraftfahrzeug 1 verkleinert dargestellte Umgebung 30 des Kraftfahrzeuges 1 in dem Parkhaus dargestellt. In dem Kraftfahrzeug 1 ist ein Anzeigesystem 10 angeordnet. Das Anzeigesystem 10 weist eine Rückfahrkamera 11 auf, die in einem hinteren Bereich des Kraftfahrzeuges 1 angeordnet ist und die rückwärtige Umgebung 30 digital aufnimmt. Die Rückfahrkamera 11 überträgt über ein Übertragungselement 14, das als ein Kabel ausgebildet ist, von der Rückfahrkamera 11 aufgenommene Bilder 20 der rückwärtigen Umgebung 30 an eine Bearbeitungseinheit 12 des Anzeigesystems 10. Die Bearbeitungseinheit 12 bearbeitet die von der Rückfahrkamera 11 erhaltenen Bilder 20 erfindungsgemäß. Danach werden die bearbeiteten Bilder 20 an eine Anzeigeeinheit 13 des Anzeigesystems 10 über ein Übertragungselement 15, das als ein Kabel ausgebildet ist, weitergeleitet. Die Anzeigeeinheit 13 kann als ein Monitor ausgebildet sein und sich an einem Armaturenbrett oder an einer Mittelkonsole des Kraftfahrzeuges 1 befinden. Eine in dem Kraftfahrzeug 1 angeordnete Initialsensorik 2 kann über ein weiteres Übertragungselement 3 Lageinformationen über die Lage des Kraftfahrzeuges 1 an das Anzeigesystem 10, insbesondere an die Bearbeitungseinheit 12, weitergeben.

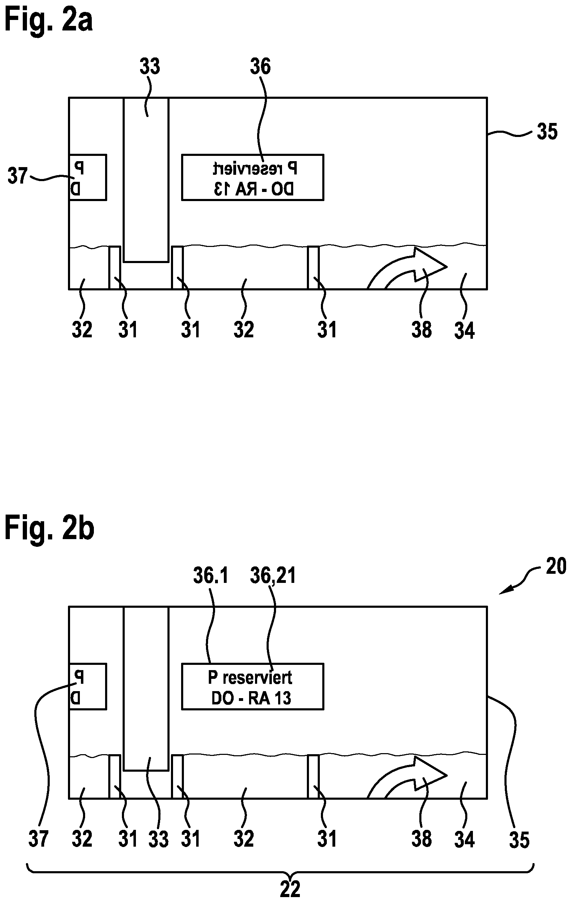

Die rückwärtige Umgebung 30 weist anderthalb Parkboxen 32 auf, die durch auf einem Parkhausboden 34 aufgemalte Streifen 31 voneinander getrennt sind. Auf dem Parkhausboden 34 ist des Weiteren ein Pfeil 38 aufgemalt. Zwischen den Parkboxen 32 befindet sich eine Säule 33. An einer Parkhauswand 35 befindet sich zu jeder Parkbox 32 ein Schild 36, 37, das angibt, dass diese Parkbox 32 für ein Kraftfahrzeug mit einem gewissen Kennzeichen reserviert ist. Schaut der Fahrer des Kraftfahrzeuges 1 in einen konventionellen Innenspiegel des Kraftfahrzeuges 1, so sieht der Fahrer das in Figur 2a dargestellte Bild im Innenspiegel. Hierbei sind die Schilder 36, 37 für den Fahrer spiegelverkehrt zu sehen, so dass die Schrift für den Fahrer schlecht oder gar nicht lesbar ist. Der Fahrer wird durch den Versuch, die spiegelverkehrte Schrift zu lesen, von dem Fahren des Fahrzeuges abgelenkt, so dass die Sicherheit beim Fahren gering ist.

In Fig. 2b hingegen ist dargestellt, wie die in Figur 1 dargestellte rückwärtige Umgebung 30 durch das erfindungsgemäße Anzeigesystem 10 dargestellt wird. Hierbei ist in Figur 2b eine Ansicht auf die Anzeigeeinheit 13 dargestellt. Das Bild 20, das von der rückwärtigen Umgebung 30 auf der Anzeigeinheit 13 zu sehen ist, ist aufgeteilt: zum einen in einen Informationsbereich 21, der einem Bild von dem Schild 36 entspricht, und zum anderen in ein übriges Bild 22, das dem Bild 20 ohne den Informationsbereich 21 entspricht. Das übrige Bild 22 ist spiegelverkehrt auf der Anzeigeeinheit 13 dargestellt und entspricht somit der Ansicht aus Figur 2a. Das heißt, dass die übrige Umgebung, die u.a. die Säule 33, der Pfeil 38 und das Schild 37 umfasst, wie in Figur 2a angeordnet ist. Auch die Lage des Informationsbereiches 21 entspricht der Lage des Schildes 36 in der Figur 2a. Erfindungsgemäß ist jedoch der Informationsbereich 21 selber spiegelbildlich zu dem übrigen Bild 22 auf der Anzeigeeinheit 13 dargestellt. Hierdurch ist die Schrift in dem Informationsbereich 21 für den Fahrer gut lesbar. Der Fahrer kann daher die Schrift leicht und schnell lesen und wird durch das Schild 36 nicht vom Fahren abgelenkt. Daher ist die Sicherheit beim Fahren durch das erfindungsgemäße Anzeigesystem 10 erhöht. Das Schild 37 befindet sich an einem äußeren Bereich des auf der Anzeigeeinheit 13 dargestellten Bildes 20 und wird von dem Anzeigesystem 10 nicht als ein Informationsbereich 21 erkannt. Des Weiteren ist ein im Vergleich zu Fig. 2a größerer Ausschnitt der rückwärtigen Umgebung 30 auf der Anzeigeeinheit 13 dargestellt.

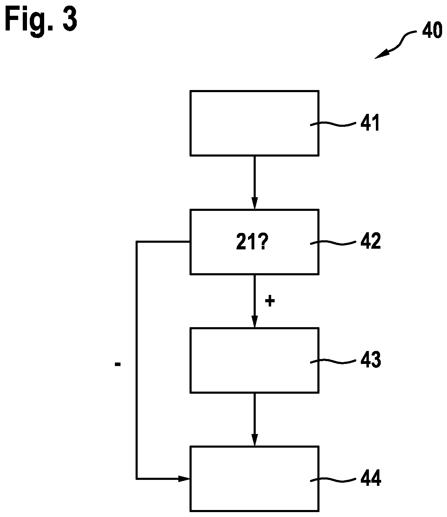

Figur 3 stellt ein erfindungsgemäßes Verfahren 40 dar, mit der eine wie in Figur 2b dargestellte Darstellung auf der Anzeigeeinheit 13 erzeugt werden kann. Zunächst nimmt die Rückfahrkamera 11 in einem Schritt 41 die rückwärtige Umgebung 30 des Kraftfahrzeuges 1 auf und leitet die so aufgenommenen Bilder 20 an die Bearbeitungseinheit 12 weiter.

Die Bearbeitungseinheit 12 untersucht jeweils das erhaltene Bild 20 in einem Schritt 42 darauf, ob ein Informationsbereich 21 vorhanden ist. Dabei kann es sein, dass die Bearbeitungseinheit 12 sich auf einen mittleren Bereich des Bildes 20, in dem sich z. B. das Schild 36 befindet, bei der Untersuchung beschränkt. Hierdurch wird ein äußerer Bereich, in dem sich z. B. das Schild 37 befindet, bei der Untersuchung nicht berücksichtigt. Das Schild 37 wird somit nicht als Informationsbereich 21 erkannt. Das Bild 20 oder zumindest der mittlere Bereich des Bildes 20 werden nach Formen, die in der Bearbeitungseinheit 12 hinterlegt sind, abgesucht. Die Formen können der Kontur von Buchstaben und Zahlen entsprechen. Die zu suchende Kontur der Buchstaben und Zahlen ist an die Art angepasst, in der der Bearbeitungseinheit 12 das Bild 20 vorliegt. Ist z. B. das Bild 20 spiegelverkehrt, so wird nach spiegelverkehrten Formen der Buchstaben und Zahlen gesucht. Erkennt die Bearbeitungseinheit 12 die hinterlegten Formen, so fasst die Bearbeitungseinheit 12 die Formen und deren unmittelbare Umgebung in einen oder mehrere Informationsbereiche 21 zusammen. Im vorliegenden Beispiel werden die erkannten Formen der Buchstaben und Zahlen "P", "r", "e", "s","e","r","v", "i", "e", "r", "t", "D", "O" ,"R", "A","1", "3" zu einem Informationsbereich 21 zusammengefasst. Hierbei hilft auch die Umrandung 36.1 des Schildes 36, das die Bearbeitungseinheit 12 unschwer als Rand des Informationsbereiches 21 definieren kann.

Stellt die Bearbeitungseinheit 12 fest, dass kein Informationsbereich 21 vorhanden ist, was in Figur 3 durch das "-"-Zeichen symbolisiert ist, so leitet die Bearbeitungseinheit 12 in einem Schritt 44 das Bild 20 an die Anzeigeeinheit 13 weiter, auf der das Bild 20 dargestellt wird. Hierbei kann optional in einem nicht dargestellten Schritt vorgesehen sein, dass, wenn das Bild 20 nicht spiegelverkehrt von der Rückfahrkamera 11 weitergeleitet wird, die Bearbeitungseinheit 12 vor dem Weiterleiten an die Anzeigeeinheit 13 das gesamte, auf der Anzeigeeinheit 13 darzustellende Bild 20 in die gewünschte, spiegelverkehrte Ansicht überführt.

Stellt die Bearbeitungseinheit 12 hingegen fest, dass ein Informationsbereich 21 vorhanden ist, was in Figur 3 durch das "+"-Zeichen symbolisiert ist, so führt die Bearbeitungseinheit 12 Schritt 43 durch. In Schritt 43 unterteilt die Bearbeitungseinheit 12 zunächst das von der Rückfahrkamera 11 erhaltene Bild 20 in den Informationsbereich 21 und in das übrige Bild 22. Die Bearbeitungseinheit 12 bearbeitet das Bild 20 dahingehend, dass der Informationsbereich 21 nach der Bearbeitung des Bildes 20 spiegelbildlich zu dem übrigen Bild 22 darstellbar ist und zugleich das übrige Bild 22 wie in einem konventionellen Spiegel des Kraftfahrzeuges 1 auf der Anzeigeeinheit 13 dargestellt werden kann. Bei dieser Bearbeitung kann die Bearbeitungseinheit 12 den Informationsbereich 21 und/oder das übrige Bild 22 bearbeiten, insbesondere spiegeln, je nachdem, wie die Bearbeitungseinheit 12 das Bild 20 von der Rückfahrkamera 11 erhält.

Erhält die Bearbeitungseinheit 12 beispielsweise von der Rückfahrkamera 11 ein Bild 20, das auf den Kopf gestellt und spiegelverkehrt ist und in dem somit "oben" und "unten" sowie "links" und "rechts" vertauscht sind, so wird die Bearbeitungseinheit 12 für den Informationsbereich 21 das erhaltene Bild 20 sowohl an einer horizontalen als auch an einer vertikalen Achse spiegeln, während die Bearbeitungseinheit 12 das übrige Bild 22 nur an einer horizontalen Achse spiegeln wird. Erhält die Bearbeitungseinheit 12 hingegen beispielsweise von der Rückfahrkamera 11 ein Bild 20, in dem "oben" und "unten" sowie "links" und "rechts" nicht vertauscht sind, so wird die Bearbeitungseinheit 12 für den Informationsbereich 21 keine Spiegelung vornehmen, während die Bearbeitungseinheit 12 das übrige Bild 22 nur an einer vertikalen Achse spiegeln wird. In allen Fällen wird die Lage des Informationsbereiches 21 in dem übrigen Bild 22 beibehalten.

Nach der Bearbeitung findet im Falle eines vorhandenen Informationsbereiches 21 ebenfalls Schritt 44 statt, in dem die Bearbeitungseinheit 12 das bearbeitete Bild 20 an die Anzeigeeinheit 13 weitergeleitet, auf der das Bild 20 dargestellt wird.

## Patentansprüche

1. Anzeigesystem (10) für ein Fahrzeug (1), mit dem eine Umgebung (30) des Fahrzeugs (1) anzeigbar ist,
mit mindestens einer Kamera (11) zur Aufnahme eines Bildes (20) der Umgebung (30), wobei die Kamera (11) eine Rückfahrkamera (11) ist und so angeordnet ist, dass durch die Kamera (11) ein Bild (20) der rückwärtigen Umgebung (30) des Fahrzeugs (1) aufnehmbar ist,
mit einer Anzeigeeinheit (13), auf der das Bild (20) zumindest teilweise darstellbar ist, das Anzeigesystem (10) eine Bearbeitungseinheit (12) aufweist, die ausgestaltet ist, das Bild (20) spiegelverkehrt darzustellen,
**dadurch gekennzeichnet, dass**
die Bearbeitungseinheit weiter ausgestaltet ist, einen Informationsbereich (21) automatisch zu erkennen und das auf der Anzeigeeinheit (13) darzustellende Bild (20) zumindest teilweise derart zu bearbeiten, dass der Informationsbereich (21) in einem übrigen Bild (22) auf der Anzeigeeinheit (13) in einer Ansicht, die spiegelbildlich zu dem übrigen Bild (22) ist, darzustellen,
wobei der Informationsbereich (21) wenigstens ein Zeichen enthält das in der Ansicht, die spiegelbildlich zu dem übrigen auf der Anzeigeeinheit (13) darzustellenden Bild (22) ist, eine für den Fahrer besser oder überhaupt aufnehmbare Information enthält.

2. Anzeigesystem (10) nach Anspruch 1, **dadurch gekennzeichnet, dass** der Informationsbereich (21) mindestens ein Schriftzeichen und/oder eine Zahl und/oder ein Sonderzeichen enthält und/oder ein Schild ist, wobei insbesondere der Informationsbereich (21) mit einer Umrandung (36.1) zumindest teilweise umgeben ist.

3. Anzeigesystem (10) nach einem der Ansprüche 1 oder 2, **dadurch gekennzeichnet, dass** der Informationsbereich (21) sich nur in einem mittleren Bereich des Bildes (20) befindet.

4. Anzeigesystem (10) nach einem der vorhergehenden Ansprüche, **dadurch gekennzeichnet, dass** in der Bearbeitungseinheit (12) Formen hinterlegt sind, mit deren Hilfe die Bearbeitungseinheit (12) den Informationsbereich (21) erkennt.

5. Anzeigesystem (10) nach einem der vorhergehenden Ansprüche, **dadurch gekennzeichnet, dass** die Bearbeitungseinheit (12) die Bearbeitung digital vornimmt, wobei insbesondere der Informationsbereich (21) nach der Bearbeitung in das übrige Bild (22) eingebunden ist.

6. Anzeigesystem (10) nach einem der vorhergehenden Ansprüche, **dadurch gekennzeichnet, dass** die Bearbeitungseinheit (12) die Lage des Informationsbereich (21) durch zumindest eine Lageinformation über eine Bodenneigung und/oder Fahrzeugneigung, die die Bearbeitungseinheit (12) erhält, bestimmt.

7. Verfahren (40) zum Anzeigen einer Umgebung (30) eines Fahrzeuges (1),
wobei eine Kamera (11) ein Bild (20) von der Umgebung (30) des Fahrzeuges (1) aufnimmt,
wobei die Kamera (11) eine Rückfahrkamera (11) ist und so angeordnet ist, dass durch die Kamera (11) ein Bild (20) der rückwärtigen Umgebung (30) des Fahrzeugs (1) aufnehmbar ist,
wobei eine Anzeigeeinheit (13) das Bild (20) zumindest teilweise darstellt,
das Anzeigesystem (10) eine Bearbeitungseinheit (12) aufweist, die ausgestaltet ist, das Bild (20) spiegelverkehrt darzustellen,
**dadurch gekennzeichnet, dass**
eine Bearbeitungseinheit (12) erkennt, ob das Bild (20) einen Informationsbereich (21) enthält,
und, wenn die Bearbeitungseinheit (12) einen Informationsbereich (21) erkannt hat, das auf der Anzeigeeinheit (13) darzustellende Bild (20) zumindest teilweise derart bearbeitet, dass der Informationsbereich (21) in einem übrigen Bild (22) auf der Anzeigeeinheit (13) in einer Ansicht, die spiegelbildlich zu dem übrigen Bild (22) ist, dargestellt wird,
wobei der Informationsbereich (21) wenigstens ein Zeichen enthält das in der Ansicht, die spiegelbildlich zu dem übrigen auf der Anzeigeeinheit (13) darzustellenden Bild (22) ist, eine für den Fahrer besser oder überhaupt aufnehmbare Information enthält.

8. Verfahren (40) nach Anspruch 7, **dadurch gekennzeichnet, dass** es mit einem Anzeigesystem (10) nach einem der Ansprüche 1 bis 7 betrieben wird.

## Claims

1. Display system (10) for a vehicle (1), with which the surroundings (30) of the vehicle (1) can be displayed,
having at least one camera (11) for capturing an image (20) of the surroundings (30), wherein the camera (11) is a rear view camera (11) and is arranged in such a way that an image (20) of the surroundings (30) to the rear of the vehicle (1) can be captured by means of the camera (11), and
having a display unit (13) on which the image (20) can be at least partially displayed,
the display system (10) has a processing unit (12) which is configured to display the image (20) in a laterally reversed fashion,
**characterized in that**
the processing unit is also configured to detect an information region (21) automatically and to process at least partially the image (20) which is to be displayed on the display unit (13) in such a way that the information region (21) to display in the rest of an image (22) on the display unit (13) in a view which is mirror-inverted with respect to the rest of the image (22),
wherein the information region (21) contains at least one character which, in the view which is mirror-inverted with respect to the rest of the image (22) which is to be displayed on the display unit (13), contains information which can be perceived better, or can be perceived at all, by the driver.

2. Display system (10) according to Claim 1, **characterized in that** the information region (21) contains at least one letter and/or one number and/or one special character and/or one sign, wherein, in particular, the information region (21) is at least partially surrounded with a border (36.1).

3. Display system (10) according to one of Claims 1 or 2, **characterized in that** the information region (21) is located only in a central region of the image (20).

4. Display system (10) according to one of the preceding claims, **characterized in that** shapes which can be used by the processing unit (12) to detect the information region (21) are stored in the processing unit (12).

5. Display system (10) according to one of the preceding claims, **characterized in that** the processing unit (12) performs the processing in a digital fashion, wherein, in particular, the information region (21) is integrated into the rest of the image (22) after the processing.

6. Display system (10) according to one of the preceding claims, **characterized in that** the processing unit (12) determines the position of the information region (21) by means of at least the position information relating to inclination of the ground and/or inclination of the vehicle which the processing unit (12) receives.

7. Method (40) for displaying the surroundings (30) of a vehicle (1),
wherein a camera (11) captures an image (20) of the surroundings (30) of the vehicle (1),
wherein the camera (11) is a rear view camera (11) and is arranged in such a way that an image (20) of the surroundings (30) to the rear of the vehicle (1) can be captured by means of the camera,
wherein a display unit (13) at least partially displays the image (20),
the display system (10) has a processing unit (12) which is configured to display the image (20) in a laterally reversed fashion,
**characterized in that**
a processing unit (12) detects whether the image (20) contains an information region (21),
and if the processing unit (12) has detected an information region (21), said processing unit (12) processes at least partially the image (12) which is to be displayed on the display unit (13), in such a way that the information region (21) is displayed in the rest of the image (22) on the display unit (13) in a view which is mirror-inverted with respect to the rest of the image (22),
wherein the information region (21) contains at least one character which, in the view which is mirror-inverted with respect to the rest of the image (22) to be displayed on the display unit (13), contains information which can be perceived better, or can be perceived at all, by the driver.

8. Method (40) according to Claim 7, **characterized in that** said method (40) is operated with a display system (10) according to one of Claims 1 to 7.

## Revendications

1. Système d'affichage (10) destiné à un véhicule (1), permettant d'afficher un environnement (30) du véhicule (1),
comportant au moins une caméra (11) permettant d'acquérir une image (20) de l'environnement (30), dans lequel la caméra (11) est une caméra de recul (11) et est agencée de manière à ce qu'une image (20) de l'environnement (30) situé vers l'arrière du véhicule (1) puisse être acquise par la caméra (11),
comportant une unité d'affichage (13) sur laquelle l'image (20) peut être représentée au moins partiellement, le système d'affichage (10) comportant une unité de traitement (12) qui est conçue pour représenter de manière symétrique dans un miroir l'image (20),
**caractérisé en ce que** l'unité de traitement est en outre conçue pour reconnaître automatiquement une zone d'information (21) et pour traiter au moins partiellement l'image (20) devant être représentée sur l'unité d'affichage (13) de manière à ce que la zone d'information (21) à représenter dans une autre image (22) sur l'unité d'affichage (13) dans une vue qui est symétrique dans un miroir de l'autre image (22),
dans lequel la zone d'information (21) contient au moins un symbole qui contient une information pouvant être mieux ou totalement perçue par le conducteur dans la vue symétrique dans un miroir de l'autre image (22) devant être représentée sur l'unité d'affichage (13).

2. Système d'affichage (10) selon la revendication 1, **caractérisé en ce que** la zone d'information (21) contient au moins un caractère et/ou un chiffre et/ou un caractère spécial et/ou est un panneau, dans lequel la zone d'information (21) est notamment entourée au moins partiellement d'une bordure (36.1).

3. Système d'affichage (10) selon l'une quelconque des revendications 1 ou 2, **caractérisé en ce que** la zone d'information (21) ne se trouve que dans une zone centrale de l'image (20).

4. Système d'affichage (10) selon l'une quelconque des revendications précédentes, **caractérisé en ce que** des formes sont stockées dans l'unité de traitement (12), à l'aide desquelles l'unité de traitement (12) reconnaît la zone d'information (21).

5. Système d'affichage (10) selon l'une quelconque des revendications précédentes, **caractérisé en ce que** l'unité de traitement (12) effectue numériquement le traitement, dans lequel la zone d'information (21) est notamment intégrée à l'autre image (22) après le traitement.

6. Système d'affichage (10) selon l'une quelconque des revendications précédentes, **caractérisé en ce que** l'unité de traitement (12) détermine la position de la zone d'information (21) au moyen d'au moins une information de position concernant une inclinaison du sol et/ou une inclinaison du véhicule, qui est obtenue par l'unité de traitement (12).

7. Procédé (40) d'affichage d'un environnement (30) d'un véhicule (1), dans lequel une caméra (11) acquiert une image (20) de l'environnement (30) du véhicule (1),
dans lequel la caméra (11) est une caméra de recul (11) et est agencée de manière à ce qu'une image (20) de l'environnement (30) situé vers l'arrière du véhicule (1) puisse être acquise par la caméra (11),
dans lequel une unité d'affichage (13) représente au moins partiellement l'image (20), le système d'affichage (10) comportant une unité de traitement (12) qui est conçue pour représenter l'image (20) de manière symétrique dans un miroir,
**caractérisé en ce qu'**une unité de traitement (12) reconnaît si l'image (20) contient une zone d'information (21) et,
lorsque l'unité de traitement (12) a détecté une zone d'information (21), elle traite au moins partiellement l'image (20) devant être représentée sur l'unité d'affichage (13) de manière à ce que la zone d'information (21) soit représentée dans une autre image (22) sur l'unité d'affichage (13) dans une vue symétrique dans un miroir de l'autre image (22),
dans lequel la zone d'information (21) contient au moins un symbole qui contient une information pouvant être mieux ou totalement perçue par le conducteur dans la vue symétrique dans un miroir de l'autre image (22) devant être représentée sur l'unité d'affichage (13).

8. Procédé (40) selon la revendication 7, **caractérisé en ce qu'**il est mis en oeuvre au moyen d'un système d'affichage (10) selon l'une quelconque des revendications 1 à 7.
